# EUROPÄISCHE PATENTSCHRIFT

(11) **EP 1 921 733 B1**
(45) Veröffentlichungstag und Bekanntmachung des Hinweises auf die Patenterteilung: **06.10.2010**
(21) Anmeldenummer: 07019994.8
(22) Anmeldetag: 12.10.2007
(51) Int. Cl.: H02K 5/22, H02K 11/00

(54) **Drehstrommotor und Steuervorrichtung**
AC motor and controller
Moteur triphasé et dispositif de commande

(30) Priorität: 08.11.2006 DE 102006052583
(43) Veröffentlichungstag der Anmeldung: 14.05.2008
(73) Patentinhaber: Jungheinrich Aktiengesellschaft, 22047 Hamburg (DE)
(72) Erfinder: Nommensen, Björn, 22529 Hamburg (DE); Rogg, Andreas, 23554 Lübeck (DE); Weber, Christoph, Dr., 24558 Henstedt-Ulzburg (DE)
(74) Vertreter: Graalfs, Edo

(56) Entgegenhaltungen:
- EP-A- 0 562 909
- EP-A- 0 853 369
- DE-A1- 4 418 000
- US-A- 4 593 163
- US-A- 4 668 898
- US-A1- 2002 047 488

## Beschreibung

Die Erfindung bezieht sich auf einen Drehstrommotor mit einer mit Gleichstrom gespeiste Steuervorrichtung nach dem Patentanspruch 1.

Als Antriebe für Aggregate von Flurförderzeugen, beispielsweise Fahrantriebe, Servoantriebe, Pumpenantriebe und dergleichen werden zumeist Drehstrommotoren verwendet. Die Energiequelle ist normalerweise eine Batterie. Es ist daher erforderlich, einen Wechselrichter vorzusehen, der aus Gleichstrom Drehstrom für den Elektromotor erzeugt. Aus diesem Grunde ist dem Elektromotor eine Steuervorrichtung zugeordnet, welche einen Wechselrichter enthält und zugleich einen Steuerteil zur Steuerung des Wechselrichters, damit der Drehstrommotor in seiner Drehzahl gesteuert werden kann.

Es ist bekannt, eine Steuereinheit in einem getrennten Modul vorzusehen. Die Leistungsanschlüsse befinden sich in einem sogenannten Motorklemmbrett und müssen über zum Teil lange Kabelverbindungen mit der elektrischen Steuereinheit verbunden werden.

Es ist jedoch auch bereits bekannt, eine Steuereinheit direkt neben dem Motor anzuordnen. Dies hat den Vorteil von Kabelverbindungen reduzierter Länge. Gleichwohl ist auch ein eigenes Gehäuse für die Steuereinheit vorgesehen.

Aus DE 101 61 366 A1 ist bekannt geworden, eine Steuereinheit unmittelbar unterhalb eines Motorträgers anzubringen. Die Leistungskontaktierung erfolgt über starre Verbindungselemente, die paßgenau mit der Motoreinheit verbunden werden müssen. Dies ist nur dann möglich, wenn die Phasenanschlüsse eine ausreichende Flexibilität bzw. Biegefähigkeit besitzen, um die Verbindungselemente mit den Statorwicklungen zu verbinden. Im Niederspannungsbereich weisen die Statorwicklungen oft sehr große Querschnitte auf, was eine mechanisch spannungsfreie Verbindung an den entsprechenden Verbindungselementen erschwert.

Weitere Elektromotoren mit Steuervorrichtung sind DE 4 418 000 A1 und US 4 668 898 bekannt.

Der Erfindung liegt die Aufgabe zugrunde, einen Elektromotor, zum Beispiel Drehstrommotor mit einer mit Gleichstrom gespeisten Steuervorrichtung zu schaffen, welche sowohl einen mechanischen als auch elektrischen Zusammenbau dieser Teile auf einfache Weise ermöglicht.

Diese Aufgabe wird erfindungsgemäß durch die Merkmale des Patentanspruchs 1 gelöst.

Bei der Erfindung ist die Leiterplatte an der Außenseite eines Motorschildes aus thermisch beständigem und elektrisch isolierendem Material befestigt. Bekanntlich weist ein Elektromotor ein Motorschild auf, der üblicherweise an der offenen Stirnseite des Gehäuses angebracht ist. Er ist im Erfindungsfalle aus einem hoch wärmebeständigen und elektrisch isolierenden Material, vorzugsweise einem geeigneten Kunststoff, hergestellt. Es reicht unter Umständen aus, nur den Abschnitt des Motorschildes aus isolierendem Material vorzusehen, der in unmittelbarer Nähe zu den Anschlußkontakten und/oder den Phasenleitern liegt. Bei der Erfindung werden ferner isolierte Phasenanschlüsse durch mindestens eine Öffnung des Motorschildes in einen Zwischenraum zwischen Motorschild und Leiterplatte geführt. Über Anschlußkontakte werden die Phasenanschlüsse mit der Leiterplatte elektrisch verbunden. Schließlich sind Befestigungsmittel für die Befestigung der Leiterplatte am Motorschild vorgesehen.

Mit der Erfindung wird eine Reihe von Vorteilen erzielt. Die elektrische Verbindung zwischen dem Stator des Motors und der Leiterplatte, welche die Steuereinheit für den Motor bildet, ist kurz. Neben der Einsparung an Material wird auch eine verbesserte EMV-Eigenschaft aufgrund der kurzen Verbindungen erzielt. Das Motorschild erlaubt eine thermisch und elektrisch isolierte Anbindung der Phasenkontakte. Vor allen Dingen sind Motor und Steuervorrichtung in einem gemeinsamen Gehäuse integriert. Auf das übliche Anschlußklemmbrett kann verzichtet werden. Darüber hinaus ermöglicht die Erfindung eine unkomplizierte Montage der Steuervorrichtung am Motorgehäuse.

Nach einer Ausgestaltung der Erfindung ist die Leiterplatte an der Innenseite eines Kühlkörpers angebracht, der seinerseits von den Befestigungsmitteln gegen das Motorschild gespannt ist. Im Leistungsteil der Steuervorrichtung, die auf der Leiterplatte angebracht ist, findet eine nicht unerhebliche Wärmeentwicklung statt, die abgeführt werden muß. Hierzu dient, wie an sich bekannt, ein Kühlkörper. Der Kühlkörper dient dabei zugleich der Befestigung der Leiterplatte an dem Motorschild. Dabei kann der Kühlkörper auch unmittelbar mit der Stirnseite des Motorgehäuses verbunden werden.

Nach einer weiteren Ausgestaltung der Erfindung kann das Motorschild auf der dem Stator abgewandten Seite Vertiefungen oder Ausnehmungen aufweisen, in welchen die Phasenanschlüsse versenkt geführt sind. Die Phasenanschlüsse können nach einer weiteren Ausgestaltung der Erfindung Kabelschuhe aufweisen, welche am Motorschild festgelegt werden. Die Kabelschuhe werden über ein geeignetes Verbindungsteil mit der Leiterplatte in Kontakt gebracht. Das Verbindungsteil kann zum Beispiel auch an der Leiterplatte verlötet werden. Vorzugsweise ist das Verbindungsteil ein elektrisch leitender Abstandskörper, der zwischen einem Kabelschuh und der Leiterplatte geklemmt ist.

Zur Befestigung der Leiterplatte bzw. des Kühlkörpers kann nach einer weiteren Ausgestaltung der Erfindung am Motorschild das eine Ende von mehreren Bolzen festgelegt werden, die sich isoliert durch die Leiterplatte erstrecken. Das andere Ende der Bolzen ist mit einem Gewindeabschnitt versehen, auf den eine Mutter aufschraubbar ist zur Befestigung der Leiterplatte bzw. des Kühlkörpers am Motorschild. Vorzugsweise erstrecken sich drei Bolzen jeweils durch eine axiale Durchbohrung eines der Abstandskörper. Dadurch wird die Kontaktierung der Leistungskontakte auf der Leiterplatte neben einer Lötverbindung zusätzlich durch eine Schraubverbindung unterstützt. Die Kontaktierung der Phasenanschlüsse erfolgt weitgehend mechanisch spannungsfrei. Außerdem dienen die Leistungskontakte zur Fixierung und/oder Abstützung der Steuervorrichtung am Motorschild.

Ein Ausführungsbeispiel der Erfindung wird nachfolgend anhand von Zeichnungen näher erläutert.
- Fig. 1: zeigt perspektivisch eine Stirnansicht eines Drehstrommotors mit einem Motorschild nach der Erfindung.
- Fig. 2: zeigt den Motorschild nach Fig. 1 mit daran angebrachter Leiterplatte.

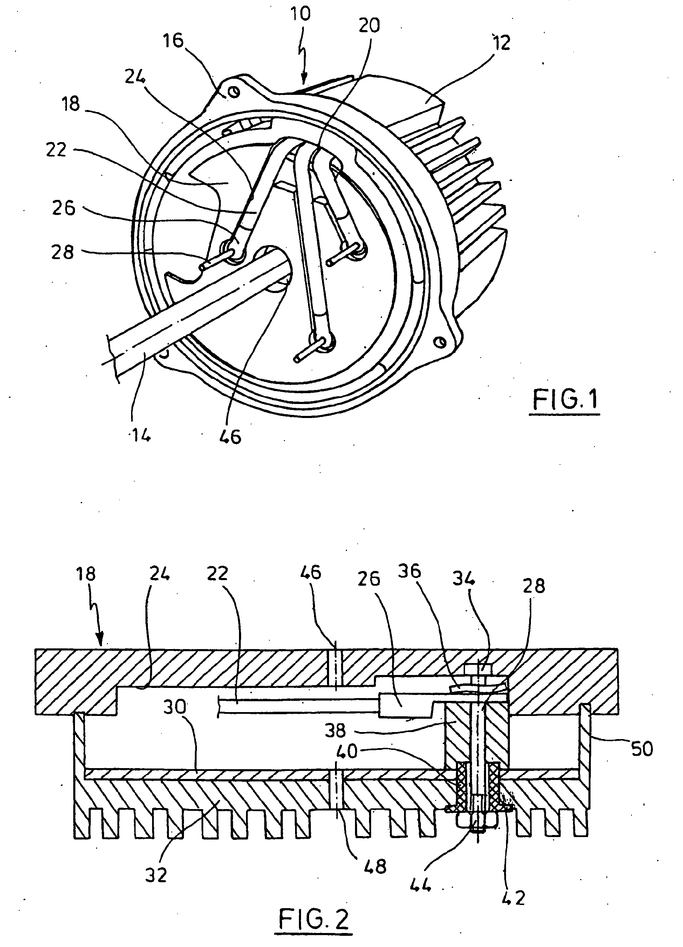

In Fig. 1 ist ein Drehstrommotor 10 dargestellt, der ein Gehäuse 12 aufweist. Stator und Läufer des Drehstrommotors, zum Beispiel Kurzschlußläufermotor, sind nicht zu erkennen. Man erkennt hingegen die Motorwelle 14, die mit einem geeigneten anzutreibenden Aggregat gekoppelt ist. Ein solches Aggregat kann zum Beispiel eine Pumpe oder ein Getriebe sein. Diese Teile können unmittelbar an die offene Stirnseite des Motors 10 angeflanscht werden, wofür das Gehäuse 12 geeignete radiale Ansätze 16 mit Löchern aufweist. Für die nachfolgende Betrachtung ist dies jedoch nicht von Bedeutung.

Die Motorwelle erstreckt sich durch eine kreisförmige Platte oder Scheibe 18 hindurch, die das Motorschild bildet. Das Motorschild 18 ist aus einem geeigneten thermisch hochfesten elektrisch isolierenden Kunststoffmaterial geformt. Das Motorschild 18 weist nahe dem Rand einen länglichen Schlitz 20 auf, durch den sich hindurch drei Kabel 22 erstrecken. Sie sind die Phasenanschlüsse für die nicht gezeigte Statorwicklung. Wie in Fig. 1 ferner erkennbar, sind die Kabel 22 in länglichen Vertiefungen 24 auf der dem Stator abgewandten Seite des Motorschildes 18 angeordnet. An den Enden weisen sie jeweils einen Kabelschuh 26 auf. Durch die Kabelschuhe 26 erstreckt sich jeweils ein Bolzen 28.

Der Motor kann in der gezeigten Weise vom Motorhersteller erstellt und geliefert werden. Zur Steuerung des Motors ist eine Steuervorrichtung erforderlich, die anhand von Fig. 2 erläutert wird. In Fig. 2 ist eine Leiterplatte 30 angedeutet, welche die elektrischen bzw. elektronischen Bauteile für den sogenannten Leistungsteil und den Steuerteil einer Steuervorrichtung für den Motor nach Fig. 1 enthält. Diese sind im einzelnen nicht dargestellt und an sich bekannt. Hierzu gehört insbesondere ein Wechselrichter sowie eine Steuervorrichtung zum Betrieb des Wechselrichters. Die Leiterplatte 30 ist auf der einen Seite eines Kühlkörpers 32 angebracht. In Fig. 2 ist ferner zu erkennen, daß ein Kopf 34 des Bolzens 28 in dem Motorschild 18 festgelegt ist, beispielsweise durch Verklebung oder sonstige Einbettung auf der dem Motor abgewandten Seite des Schildes 18. Wie ferner erkennbar, erstreckt sich der Bolzen 28 durch den Kabelschuh 26, wobei zwischen Kabelschuh 26 und Motorschild 18 bzw. Bolzenkopf 14 eine Tellerfeder 36 angeordnet ist. Zwischen dem Kabelschuh 26 und der Leiterplatte 30 ist eine Abstandshülse 38 aus elektrisch leitendem Material angeordnet, die sich auf der Leiterplatte 30 abstützt. Die Hülse 38 kann zusätzlich mit der Leiterplatte 30 verlötet werden, um einen elektrischen Kontakt zur Leiterplatte 30 herzustellen.

In dem Kühlkörper 32 befindet sich eine Durchbohrung, die mit einer Durchbohrung in der Leiterplatte 30 ausgerichtet ist und in welche hinein eine Hülse 40 aus Kunststoffmaterial eingesetzt ist. Die Hülse 40 erstreckt sich in eine Ausnehmung der Abstandshülse 38 hinein, liegt jedoch stirnseitig nicht gegen den Boden dieser Ausnehmung. Ein Flansch 42 der Hülse 40 liegt gegen die zugekehrte Seite des Kühlkörpers 32 an. Der Bolzen 28 hat einen Gewindeabschnitt, auf den eine Mutter 44 aufschraubbar ist. Wie schließlich in Fig. 2 zu sehen, weisen Motorschild 18 und Leiterplatte 30 mit Kühlkörper 32 axial ausgerichtete Öffnungen 46 bzw. 48 auf für die Hindurchführung der Motorwelle 14.

Bei der Montage der Anordnungen nach Fig. 1 und 2 wird zunächst die Tellerfeder 36 und dann ein Kabelschuh über den zugeordneten Bolzen 28 gelegt. Das Motorschild 18 kann bereits vorher mit dem Gehäuse 12 fest verbunden werden, was im einzelnen nicht dargestellt ist. Leiterplatte mit Kühlkörper und aufgelötete Hülse 38 und eingesetzte Kunststoffhülse 40 werden anschließend auf die Bolzen 28 aufgefädelt. Anschließend wird mit Hilfe der Muttern diese Anordnung gegen das Motorschild 18 gespannt. Auf diese Weise ist die Steuervorrichtung fest an einer Stirnseite des Motors 10 befestigt. Die Feder 36 sorgt für eine ausreichende Vorspannung der Hülse 38 an der Leiterplatte 30. Der Kühlkörper 30 ist dabei am Rand bei 50 gegen das Schild 18 angespannt und abgestützt.

In Fig. 2 ist aus Darstellungsgründen nur die Verbindung eines Kabels 22 mit der Leiterplatte 30 dargestellt. Es versteht sich, daß die Verbindung aller drei Phasenanschlüsse in gleicher Weise erfolgt. Ebenfalls nicht dargestellt ist die Verbindung der Gleichstromeinspeisung zur Leiterplatte 30. Zu diesem Zwecke können die beiden Gleichstromkabel seitlich in den Zwischenraum zwischen Leiterplatte 30 und Motorschild 18 hineingeführt und in geeigneter Weise mit der Leiterplatte 30 elektrisch verbunden werden. Es versteht sich, daß diese Verbindung in gleicher oder ähnlicher Weise erfolgen kann wie dies in Verbindung mit den Phasenkabeln 22 beschrieben ist. Dies bedeutet, daß die beiden Kabel zum Beispiel unterhalb der Kabel 22 in den Zwischenraum geführt und ebenfalls mit Hilfe von Bolzen und Abstandskörpern mit der Leiterplatte 30 elektrisch und mechanisch verbunden werden.

Die axialen Durchbohrungen der Hülse 38 und der Hülse 40 sind im Durchmesser deutlich größer als der Durchmesser der Bolzen 28. Auf diese Weise können Toleranzen beim Aufsetzen der Einheit aus Kühlkörper 32 und Leiterplatte 30 ausgeglichen werden.

## Patentansprüche

1. Drehstrommotor mit einer mit Gleichstrom gespeisten Steuervorrichtung, wobei die Steuervorrichtung eine Leiterplatte (30) mit Leistungs- und Steuerteil enthält, die am Gehäuse des Motors angebracht ist, wobei Phasenanschlüsse (22) des Motors und einer Gleichstromquelle über Anschlusskontakte mit der Leiterplatte (30) elektrisch verbunden sind, wobei die Leiterplatte (30) an der Außenseite eines Motorschilds (18) befestigbar ist und die isolierten Phasenanschlüsse (22) durch mindestens eine Öffnung (20) des Motorschilds (18) in einen Zwischenraum zur Leiterplatte (30) hin geführt und über Anschlusskontakte mit der Leiterplatte (30) elektrisch verbunden sind und wobei Befestigungsmittel für die Befestigung der Leiterplatte (30) vorgesehe sind, **dadurch gekennzeichnet, dass** der Motorschild (18) zumindest im Bereich der Phasenanschlüsse (22) bezienungsweise der Anschluss kontakte aus thermisch beständigem und elektrisch isolierendem Material besteht, die Leiterplatte (30) unmittelbar am Motorschild (18) über die Befestigungsmittel befestigbar ist und die isolierten Phasenanschlüsse in den Zwischenraum zwischen dem Motorschild (18) und der Leiterplatte (30) geführt sind.

2. Drehstrommotor nach Anspruch 1, **dadurch gekennzeichnet, dass** die Leiterplatte (30) an der Innenseite eines Kühlkörpers (32) angebracht ist, der seinerseits mit der Leiterplatte (30) von den Befestigungsmitteln gegen den Motorschild (18) gespannt ist.

3. Drehstrommotor nach Anspruch 1 oder 2, **dadurch gekennzeichnet, dass** die isolierten Phasenanschlüsse (22) über eine einzige Öffnung (20) im Motorschild (18) geführt sind.

4. Drehstrommotor nach einem der Ansprüche 1 bis 3, **dadurch gekennzeichnet, dass** die isolierten Phasenanschlüsse (22) in Ausnehmungen (24) an der Außenseite des Motorschildes (18) verlaufen.

5. Drehstrommotor nach einem der Ansprüche 1 bis 4, **dadurch gekennzeichnet, dass** Kabelschuhe (26) der Phasenanschlüsse (22) am Motorschild (18) festgelegt sind und über ein elektrisches Verbindungsteil mit der Leiterplatte (30) in Kontakt stehen.

6. Drehstrommotor nach Anspruch 5, **dadurch gekennzeichnet, dass** das Verbindungsteil ein elektrisch leitender Abstandskörper (38) ist, der zwischen einem Kabelschuh (26) und der Leiterplatte (10) gespannt ist.

7. Drehstrommotor nach einem der Ansprüche 1 bis 6, **dadurch gekennzeichnet, dass** am Motorschild (18) das eine Ende (34) von mehreren Bolzen (28) festgelegt ist, die sich isoliert durch die Leiterplatte (30) erstrecken und das andere Ende der Bolzen (28) einen Gewindeabschnitt aufweist, auf den eine Mutter (44) aufschraubbar ist zur Festlegung der Leiterplatte (30) bzw. des Kühlkörpers (32) am Motorschild (18).

8. Drehstrommotor nach Anspruch 6 und 7, **dadurch gekennzeichnet, dass** drei Bolzen (28) sich jeweils durch eine axiale Durchbohrung des Abstandkörpers (38) erstrecken.

9. Drehstrommotor nach Anspruch 7 oder 8, **dadurch gekennzeichnet, dass** in Bohrungen der Leiterplatte (30) und des Kühlkörpers (32) eine Hülse (40) aus Isoliermaterial eingesetzt ist, durch welche sich jeweils ein Bolzen (28) erstreckt.

10. Drehstrommotor nach einem der Ansprüche 5 bis 9, **dadurch gekennzeichnet, dass** zwischen dem Motorschild (18) und den Kabelschuhen (26) jeweils eine Feder (36), vorzugsweise Tellerfeder, angeordnet ist.

## Claims

1. AC motor comprising a controller supplied with direct current, the controller containing a printed circuit board (30) with a power section and a control section, which is attached to the housing of the motor, phase terminals (22) of the motor and a direct current source being electrically connected to the printed circuit board (30) via terminal contacts, the printed circuit board (30) being able to be fastened to the outside of a motor plate (18) and the insulated phase terminals (22) being guided through at least one opening (20) of the motor plate (18) into an intermediate space towards the printed circuit board (30), and being electrically connected to the printed circuit board (30) via terminal contacts, and fastening means being provided for fastening the printed circuit board (30), **characterised in that** the motor plate (18), at least in the region of the phase terminals (22) and/or of the terminal contacts, consists of thermally-resistant and electrically-insulating material, the printed circuit board (30) being able to be fastened directly to the motor plate (18) via the fastening means and the insulated phase terminals being guided into the intermediate space between the motor plate (18) and the printed circuit board (30).

2. AC motor according to Claim 1, **characterised in that** the printed circuit board (30) is attached to the inside of a heat sink (32), which in turn is clamped with the printed circuit board (30) against the motor plate (18) by the fastening means.

3. AC motor according to Claim 1 or 2, **characterised in that** the insulated phase terminals (22) are guided in the motor plate (18) via a single opening (20).

4. AC motor according to one of Claims 1 to 3, **characterised in that** the insulated phase terminals (22) extend in recesses (24) on the outside of the motor plate (18).

5. AC motor according to one of Claims 1 to 4, **characterised in that** cable lugs (26) of the phase terminals (22) are secured to the motor plate (18) and are brought into contact with the printed circuit board (30) via an electrical connecting part.

6. AC motor according to Claim 5, **characterised in that** the connecting part is an electrically conductive spacer element (38), which is clamped between a cable lug (26) and the printed circuit board (10).

7. AC motor according to one of Claims 1 to 6, **characterised in that** one end (34) of a plurality of pins (28) is secured to the motor plate (18), said pins extending in an insulated manner through the printed circuit board (30), and the other end of the pins (28) has a threaded portion onto which a nut (44) may be screwed for securing the printed circuit board (30) and/or the heat sink (32) to the motor plate (18).

8. AC motor according to Claim 6 and 7, **characterised in that** three pins (28) extend in each case through an axial through-bore of the spacer element (38).

9. AC motor according to Claim 7 or 8, **characterised in that** a sleeve (40) made of insulating material is inserted in bores of the printed circuit board (30) and of the heat sink (32), through which a pin (28) extends in each case.

10. AC motor according to one of Claims 5 to 9, **characterised in that** between the motor plate (18) and the cable lugs (26) in each case a spring (36), preferably a disc spring, is arranged.

## Revendications

1. Moteur triphasé avec un dispositif de commande alimenté en courant continu, le dispositif de commande contenant un circuit imprimé (30) avec une partie de puissance et de commande qui est placé sur le carter du moteur, des connexions de phases (22) du moteur et une source de courant continu étant connectées électriquement au circuit imprimé (30) par le biais de contacts de connexion, le circuit imprimé (30) pouvant être fixé sur le côté extérieur d'une plaque de moteur (18), et les connexions de phases (22) isolées étant guidées, à travers au moins une ouverture (20) de la plaque de moteur (18), dans un espace intermédiaire vers le circuit imprimé (30), et étant connectées électriquement au circuit imprimé (30) par le biais de contacts de connexion, et des moyens de fixation étant prévus pour la fixation du circuit imprimé (30), **caractérisé en ce que** la plaque de moteur (18) se compose, au moins dans la zone des connexions de phases (22) ou des contacts de connexion, d'un matériau thermiquement résistant et électriquement isolant, le circuit imprimé (30) peut être fixé directement sur la plaque de moteur (18) par le biais des moyens de fixation, et les connexions de phases isolées sont guidées dans l'espace intermédiaire ente la plaque de moteur (18) et le circuit imprimé (30).

2. Moteur triphasé selon la revendication 1, **caractérisé en ce que** le circuit imprimé (30) est placé sur le côté intérieur d'un radiateur (32) qui, de son côté, est serré contre la plaque de moteur (18) avec le circuit imprimé (30) par les moyens de fixation.

3. Moteur triphasé selon la revendication 1 ou 2, **caractérisé en ce que** les connexions de phases (22) isolées sont guidées par le biais d'une ouverture (20) unique dans la plaque de moteur (18).

4. Moteur triphasé selon une des revendications 1 à 3, **caractérisé en ce que** les connexions de phases (22) isolées passent dans des évidements (24) sur le côté extérieur de la plaque de moteur (18).

5. Moteur triphasé selon une des revendications 1 à 4, **caractérisé en ce que** des cosses de câble (26) des connexions de phases (22) sont fixées sur la plaque de moteur (18) et sont en contact avec le circuit imprimé (30) par le biais d'une pièce de connexion électrique.

6. Moteur triphasé selon la revendication 5, **caractérisé en ce que** la pièce de connexion est un corps d'écartement (38) électriquement conducteur qui est serré entre une cosse de câble (26) et le circuit imprimé (10).

7. Moteur triphasé selon une des revendications 1 à 6, **caractérisé en ce que**, sur la plaque de moteur (18), il est fixé une extrémité (34) de plusieurs boulons (28) qui s'étendent de façon isolée à travers le circuit imprimé (30), et l'autre extrémité des boulons (28) présente un tronçon fileté sur lequel un écrou (44) peut être vissé pour la fixation du circuit imprimé (30) ou du radiateur (32) sur la plaque de moteur (18).

8. Moteur triphasé selon la revendication 6 ou la revendication 7, **caractérisé en ce que** trois boulons (28) s'étendent respectivement à travers un perçage axial du corps d'écartement (38).

9. Moteur triphasé selon la revendication 7 ou la revendication 8, **caractérisé en ce que**, dans des perçages du circuit imprimé (30) et du radiateur (32), est insérée une douille (40) en matériau isolant à travers laquelle s'étend respectivement un boulon (28).

10. Moteur triphasé selon une des revendications 5 à 9, **caractérisé en ce que**, entre la plaque de moteur (18) et les cosses de câble (26), il est disposé respectivement un ressort (36), de préférence une rondelle-ressort.
